# EUROPÄISCHE PATENTANMELDUNG

(11) **EP 4 553 534 A2**
(43) Veröffentlichungstag der Anmeldung: **14.05.2025**
(21) Anmeldenummer: 24211942.8
(22) Anmeldetag: 09.11.2024
(51) Int. Cl.: G01S 7/48, F03D 17/00, G01S 7/481, G01S 17/95, G01S 7/483

(54) **WINDMESSSYSTEM ZUR BESTIMMUNG EINES WINDFELDES**

(30) Priorität: 09.11.2023 DE 102023131180
(71) Anmelder: LiCuSpace GmbH, 23966 Wismar (DE)
(72) Erfinder: Gutzmann, Helmut, 23974 Blowatz (DE)
(74) Vertreter: Heinemeyer, Karsten

(57) **Zusammenfassung**

Die Erfindung betrifft ein Windmesssystem (100) zur Bestimmung eines Windfeldes (105) im Bereich mindestens einer Windenergieanlage (102), mit einer Lasereinheit (110), einer Detektionseinheit (120), einer Datenschnittstelle (130) und einer zentralen Auswerteeinheit (140). Die Lasereinheit ist ausgebildet, einen Laserstrahl (112) in eine von einer Aufstellfläche der Windenergieanlage weg weisende Richtung zu strahlen. Die Detektionseinheit ist ausgebildet, zurückreflektiertes Licht des Laserstrahls zu detektieren und ein entsprechendes Detektionssignal (122) auszugeben. Die Datenschnittstelle ist ausgebildet, durch das Detektionssignal indizierte Wetterdaten (132) bereitzustellen. Die zentrale Auswerteeinheit ist ausgebildet, die bereitgestellten Wetterdaten zu empfangen und basierend auf den Wetterdaten das im Bereich der Windenergieanlage vorliegende Windfeld zu bestimmen und abhängig von dem bestimmten Windfeld ein Ausgabesignal (142) bereitzustellen, wobei mindestens eine Lasereinheit an einem stationär an der Windenergieanlage befestigbaren Messmodul (150) des Windmesssystems angeordnet ist.

## Beschreibung

Die Erfindung betrifft ein Windmesssystem zur Bestimmung eines Windfeldes im Bereich mindestens einer Windenergieanlage. Zudem betrifft die Erfindung ein Verfahren zur Bestimmung eines Windfeldes im Bereich mindestens einer Windenergieanlage. Schließlich betrifft die Erfindung auch ein Verfahren zur Kalibrierung des erfindungsgemäßen Windmesssystems und ein Computerprogramm mit einem Programmcode zur Durchführung des erfindungsgemäßen Verfahrens.

Grundsätzlich sind Messsysteme bekannt, die Wetterdaten basierend auf der sogenannten Lidar (Light Detection And Ranging) - Methode aufnehmen. Dabei wird ein Laserstrahl verwendet, um basierend auf zurückreflektiertem Licht und einer Auswertung unter Berücksichtigung des Doppler-Effekts Wetterdaten zu erfassen. Das zurückreflektierte Licht entsteht beispielsweise bei der Streuung an Staubteilchen in der Luft, zu dass unter anderem eine präzise Entfernungsmessung von Wolken und Aerosolschichten über diese Methode möglich ist.

Aufgabe der vorliegenden Erfindung ist es, ein verbessertes Windmesssystem, insbesondere ein besonders zuverlässiges und einfach skalierbares Windmesssystem, bereitzustellen.

Gemäß einem ersten Aspekt der Erfindung wird hierzu ein Windmesssystem zur Bestimmung eines Windfeldes im Bereich mindestens einer Windenergieanlage vorgeschlagen, mit
- mindestens einer Lasereinheit, welche angeordnet und ausgebildet ist, einen Laserstrahl in eine von einer Aufstellfläche der Windenergieanlage weg weisende Richtung zu strahlen,
- mindestens einer Detektionseinheit, welche angeordnet und ausgebildet ist, zurückreflektiertes Licht des Laserstrahls zu detektieren und ein entsprechendes Detektionssignal auszugeben,
- mindestens einer Datenschnittstelle, welche angeordnet und ausgebildet ist, durch das Detektionssignal indizierte Wetterdaten bereitzustellen,
- einer zentralen Auswerteeinheit, die ausgebildet ist, die bereitgestellten Wetterdaten zu empfangen und basierend auf den Wetterdaten das im Bereich der Windenergieanlage vorliegende Windfeld zu bestimmen und abhängig von dem bestimmten Windfeld ein Ausgabesignal bereitzustellen,
wobei mindestens eine Lasereinheit an einem stationär an der Windenergieanlage befestigbaren Messmodul des Windmesssystems angeordnet ist.

Im Rahmen der Erfindung wurde erkannt, dass durch eine präzise Ausrichtung von Windenergieanlagen ein Ertrag an Energieausbeute verbessert werden kann, so dass ein Windfeld besonders präzise im Bereich mindestens einer Windenergieanlage bestimmt werden sollte. Hierfür wird erfindungsgemäß das Messmodul mit der mindestens einen Lasereinheit stationär an der Windenergieanlage befestigt.

Vorteilhaft ist dabei, dass die mindestens eine Lasereinheit in eine von der Aufstellfläche der Windenergieanlage weg weisende Richtung angeordnet ist, um das Windfeld im Bereich der Rotorblätter und über dem Bereich der Rotorblätter mit dem entsprechenden Laserstrahl untersuchen zu können.

Weiterhin vorteilhaft kann die zentrale Auswerteeinheit über das Ausgabesignal eine Veränderung der Ausrichtung der mindestens einen Windenergieanlage auslösen und dadurch eine Anpassung der Ausrichtung an die aktuelle Windsituation bewirken. Dadurch erlaubt das erfindungsgemäße Windmesssystem ein besonders effizientes Betreiben mindestens einer Windenergieanlage, insbesondere eines Windparks aus einer Vielzahl von Windenergieanlagen.

Das erfindungsgemäße Windmesssystem erlaubt vorteilhaft eine kontinuierliche Bestimmung des vorliegenden Windfeldes und dadurch eine ständige Anpassung der Ausrichtung der entsprechenden Windenergieanlage an das vorliegende Windfeld.

Schließlich lässt sich das erfindungsgemäße Windmesssystem besonders einfach in einen bestehenden Windpark und/oder in eine bestehende Vielzahl von Windenergieanlagen integrieren, da an der entsprechenden Windenergieanlage keine baulichen Maßnahmen durchgeführt werden müssen. Insofern lässt sich dieses Windmesssystem auch nachträglich an eine jeweilige Windenergieanlage anbringen.

Der Laserstrahl kann ein statischer Laserstrahl mit einer fest vorgegebenen Ausrichtung oder alternativ ein dynamisch veränderlicher Laserstrahl, also ein Laserstrahl mit einer veränderbaren Ausrichtung, sein. Durch die Verwendung eines Laserstrahls kann vorteilhaft eine Messreichweite von bis zu 1 km im nichtsichtbaren Farbbereich erreicht werden.

Das bestimmte Windfeld ist eine Kombination von Daten, die eine dreidimensionale Verteilung von Windgeschwindigkeiten und Windausrichtungen im Bereich der mindestens einen Windenergieanlage indiziert.

Vorzugsweise ist genau ein Messmodul an der entsprechenden Windenergieanlage vorgesehen. Das Messmodul hat dabei vorzugsweise eine dezentrale Auswerteinheit, welche das Detektionssignal verarbeitet um dadurch ein für die zentrale Auswerteeinheit besonders einfach auswertbares Detektionssignal über die Datenschnittstelle bereitzustellen.

Die Bestimmung des vorliegenden Windfeldes erfolgt unter anderem basierend auf vorbestimmten Algorithmen, die etwa in einer mit der zentralen Auswerteinheit verbundenen Speichereinheit hinterlegt sind. Die Algorithmen erlauben eine Auswertung der indizierten Wetterdaten des Messsystems, wobei Details für die Laser-basierte Windmessung im Rahmen der Lidar-Methode dem Fachmann grundsätzlich bekannt sind, so dass auf Details dieser Algorithmen im Folgenden nicht weiter eingegangen wird.

Vorzugsweise erlaubt das erfindungsgemäße Windmesssystem die Bestimmung das Windfeldes, also eines dreidimensionalen Feldes von Windgeschwindigkeiten und entsprechenden Windrichtungen, in einem Höhenbereich von 50 m bis mindestens 300 m mit einer Auflösung von unter 1 m.

Nachfolgend werden bevorzugte Ausführungsformen des erfindungsgemäßen Windmesssystems beschrieben.

In einer besonders bevorzugten Ausführungsform ist das Messmodul ringförmig ausgebildet und umgibt in einem montierten Zustand einen Mast der Windenergieanlage. In dieser Ausführungsform wird vorteilhaft eine in der unmittelbaren Umgebung der Windenergieanlage detektierende Sensorik bereitgestellt. Zudem erlaubt die Ringform eine robuste und besonders zuverlässige Befestigung des Messmoduls an dem Mast. Dadurch, dass der Mast typischerweise einen nach oben abnehmenden Querschnitt hat, sorgt die ringförmige Ausbildung auch für eine Abrutschsicherung, da das Messmodul durch die Ringform sicher auf einer Höhe gehalten werden kann. Vorzugsweise wird das Messmodul bei der Montage an dem Mast über einen Klappmechanismus an den Mast geklappt und im geklappten Zustand festgeschraubt. Alternativ oder ergänzend kann das Messmodul ohne Verschluss U-förmig ausgebildet sein und durch ein Verschließen des Verschlusses seine Ringform erhalten. Alternativ oder ergänzend kann auch eine fest vorgegebene Ringform des Messmoduls bei einem Bau des Mastes von oben auf den Mast gesetzt werden, um dadurch seine dauerhafte Anordnung am Mast zu erhalten. Schließlich kann das Messmodul elastisch ausgebildet sein und über einen Verschlussmechanismus in die Ringform gebracht werden. Vorzugsweise erfolgt die Anordnung des ringförmigen Messmoduls in einem unteren Bereich des Mastes einer Windenergieanlage, jedoch in einer vor Vandalismus geschützten Höhe von mehr als 3 m, insbesondere von mehr als 4 m.

In einer weiteren besonders bevorzugten Ausführungsform umfasst das Messmodul mindestens einen Aufnahmebereich, insbesondere mindestens drei Aufnahmebereiche, zum lösebaren Befestigen mindestens eines Detektionsgehäuses, wobei das Detektionsgehäuse eine Lasereinheit und eine Detektionseinheit des Windmesssystems umfasst. In dieser Ausführungsform bildet das Detektionsgehäuse ein Submodul, welches einfach in das Messmodul eingesetzt werden kann. Vorzugsweise werden durch das Einsetzen in den dafür vorgesehenen Aufnahmebereich auch elektronische Verbindungen zu der mindestens einen Datenschnittstelle an dem Messmodul bereitgestellt, so dass eine signaltechnisch optimierte Gestaltung des Detektionsgehäuses für das Messmodul durch einen gemeinsamen Hersteller möglich ist. Vorzugsweise ist der Aufnahmebereich derart gestaltet, dass die lösbare Befestigung manuell gelöst werden kann, wie etwa über einen Hebel, eine Schraube, eine Klappe und/oder dergleichen manuell gelöst werden kann. Besonders bevorzugt sind die mindestens drei Detektionsgehäuse in den mindestens drei Aufnahmebereichen gleichmäßig in dem ringförmigen Messmodul um den Mast angeordnet. Dadurch können Laserstrahlen in verschiedenen Umgebungsrichtungen strahlen und dadurch für ein Ermitteln eines besonders zuverlässigen Windfeldes genutzt werden.

Das Vorsehen von mehreren Lasereinheiten und Detektionseinheiten an einer Windenergieanlage, wie etwa von mindestens 8 Lasereinheiten und mindestens 8 Detektionseinheiten, kann eine präzise Eliminierung eines Effekts eines Nachschleppwirbels der Windenergieanlage ermöglichen.

In einer vorteilhaften Variante der vorhergehenden Ausführungsform kann ein Aufnahmebereich durch eine elektronisch verfahrbare Abschirmung vor Umgebungseinflüssen geschützt werden. Vorzugsweise ist eine Datenschnittstelle des Messmoduls ausgebildet, ein Schließsignal einer Steuereinheit des Windmesssystems zu empfangen. Dadurch kann eine zentrale Steuereinheit des Windmesssystems im Falle von außergewöhnlichen Wetterereignissen, wie sehr starkem Regen und/oder sehr hohen Windgeschwindigkeiten, über das Schließsignal eine Abschirmung der Detektionsgehäuse gegenüber Umgebungseinflüssen ermöglichen. Vorzugsweise ist die Abschirmung über eine Schiene verfahrbar ausgestaltet. Hierdurch kann eine besonders gute Sicherung der Abschirmung gegenüber starken Winden ermöglicht werden. Die verfahrbare Abschirmung kann alternativ oder ergänzend durch einen Lamellenverschluss gebildet sein. Insbesondere kann die verfahrbare Abschirmung durch einen klappbaren Verschluss gebildet sein.

In einer besonders vorteilhaften Ausführungsform, weist das Windmesssystem eine Mehrzahl von Messmodulen mit mindestens einer jeweiligen Lasereinheit und mit mindestens einer jeweiligen Detektionseinheit auf, wobei jedes Messmodul mindestens eine Datenschnittstelle zum Bereitstellen der empfangenen Daten für die zentrale Auswerteeinheit aufweist. Durch die Vernetzung der Mehrzahl von Messmodulen mit der zentralen Auswerteeinheit in dieser Ausführungsform, können besonders viele Daten von räumlich verteilten Standorten für die Bestimmung des Windfeldes berücksichtigt werden. Diese Ausführungsform ist besonders vorteilhaft verwendbar in einem Windpark mit einer entsprechenden Mehrzahl von Windenergieanlagen.

In einer bevorzugten Ausführungsform ist eine Ausrichtung der Lasereinheiten eines Messmoduls derart gewählt, dass die Laserstrahlen eine Drehsymmetrie bezüglich einer durch den Mast der entsprechenden Windenergieanlage gebildeten Drehachse aufweisen. Hierdurch kann eine aktuelle Windsituation in einer Umgebung der Windenergieanlage besonders gleichmäßig und großflächig detektiert werden. Vorzugsweise sind dabei Ausrichtungsdaten, die eine aktuelle Ausrichtung der Lasereinheiten indizieren bei der zentralen Auswerteeinheit hinterlegt und/oder für die zentrale Auswerteeinheit verfügbar, so dass die entsprechend vorliegende Ausrichtung bei der Bestimmung des vorliegenden Windfeldes berücksichtigt werden kann.

In einer vorteilhaften Ausführungsform weist das Windmesssystem weiterhin eine Speichereinheit auf, in der Daten zu jeder Lasereinheit des Windmesssystems hinterlegt sind, insbesondere Identifikationsdaten und/oder Kalibrierungsdaten hinterlegt sind. In dieser Ausführungsform kann über die hinterlegten Daten ein besonders schnelles und zuverlässiges Verarbeiten des Detektionssignals durch die zentrale Auswerteeinheit erfolgen. Die Identifikationsdaten indizieren vorzugsweise eine Zuordnung zwischen empfangenem Detektionssignal und einem Standort des dazugehörigen Messmoduls. Hierdurch können die Daten aus dem Detektionssignal besonders einfach einer räumlichen Position relativ zu der zentralen Auswerteeinheit zugeordnet werden. Das ist besonders vorteilhaft für eine Mehrzahl an Messmodulen an verschiedenen Windenergieanlagen, beispielsweise innerhalb eines Windparks.

In einer weiteren Ausführungsform sind die Lasereinheiten des Windmesssystems ausgebildet, in einem gepulsten Laserbetrieb zu arbeiten. Hierdurch kann eine energieeffiziente Messung durchgeführt werden und eine Zuordnung der reflektierten Laserstrahlen zu den bereitgestellten Laserstrahlen ist zuverlässig möglich.

In einer weiteren Ausführungsform ist die zentrale Auswerteeinheit ausgebildet, für die Bestimmung des vorliegenden Windfeldes gespeicherte Steuerungsdaten, Konfigurationsdaten und/oder Nutzerdaten zu verwenden. Steuerungsdaten können beispielsweise eine aktuelle Rotationsgeschwindigkeit und/oder eine voreingestellte Drehzahl einer Windenergieanlage, eine aktuelle Ausrichtung einer Windenergieanlage, eine aktuelle Position einer elektronisch verfahrbaren Abschirmung eines Messmoduls oder dergleichen betreffen. Konfigurationsdaten können beispielsweise eine detektierte Verwendung von vorbestimmten Aufnahmen eines Messmoduls durch ein jeweiliges Detektionsgehäuse, oder Gerätetypen von verwendeten Komponenten des Windmesssystems betreffen. Nutzerdaten können beispielsweise manuell angepasste Einstellungen des Windmesssystems und/oder individuell eingestellte bevorzugte Betriebszeiten oder dergleichen betreffen.

In einer bevorzugten Ausführungsform ist an mindestens einem Messmodul eine Sensoreinheit zur Bestimmung von Temperaturdaten und/oder Luftdichtedaten angeordnet, wobei die zentrale Auswerteeinheit ausgebildet ist, für die Bestimmung des vorliegenden Windfeldes die Temperaturdaten und/oder die Luftdichtedaten zumindest teilweise zu verwenden. In dieser Ausführungsform kann eine besonders zuverlässige Bestimmung des Windfeldes ermöglicht werden, da neben vorliegenden Luftströmungen auch Temperatur und/oder Luftdichtedaten eine zuverlässige Windprognose für die nahe Zukunft ermöglichen und mithin eine Berücksichtigung der aktuellen Windentwicklung ermöglichen. Alternativ oder ergänzend kann eine entsprechende Sensoreinheit separat von dem Messmodul vorgesehen sein und entsprechende Messwerte an die zentrale Auswerteeinheit übertragen.

In einer weiteren Ausführungsform ist die zentrale Auswerteeinheit ausgebildet, Daten, insbesondere Wetter-spezifische Daten, mit einem anderen Windmesssystem auszutauschen. Durch den Austausch von Wetter-spezifischen Daten, wie etwa Winddaten, Temperaturdaten, Luftdichtedaten oder dergleichen, können bestimmte alte Windfelder von anderen Windmesssystemen für die zukünftige Bestimmung eines Windfeldes an einem anderen Ort, wie etwa an einem räumlich benachbarten Ort, berücksichtigt werden. Hierdurch ist eine besonders zuverlässige Bestimmung des vorliegenden Windfeldes möglich.

In einer weiteren Ausführungsform wird durch ein neuronales Netz und/oder ein vergleichbares selbstlernendes System, welches für die zentrale Auswerteeinheit bereitgestellt ist, das vorliegende Windfeld bestimmt. Hierdurch kann aus festgestellten Abweichungen zwischen dem in der Vergangenheit bestimmten Windfeld und darauffolgenden Windfeld-indizierenden Wetter-spezifischen Daten eine automatische Korrektur bei der zukünftigen Bestimmung des Windfeldes erfolgen. Hierdurch kann eine Zuverlässigkeit bei Bestimmung des Windfeldes mit einer Dauer des Betriebs des Windmesssystems verbessert werden.

In einer weiteren Ausführungsform weist das Windmesssystem weiterhin mindestens ein bodennahes Messmodul auf, welches nicht an einer Windenergieanlage angeordnet ist. In dieser Ausführungsform wird auch mindestens ein Standort abseits einer Windenergieanlage für die Auswertung der aktuellen Wetterlage berücksichtigt, wobei sich dieser Standort vorzugsweise in einer Umgebung einer Windenergieanlage befindet. Durch derartige Standorte abseits von einer Windenergieanlage kann vorteilhaft eine Detektion über die entsprechende Lasereinheit und die entsprechende Detektionseinheit an genau denjenigen Ort erfolgen, an denen eine solche Detektion aus aerodynamischen Gründen zu einem besonders präzisen Ergebnis für das zu bestimmende Windfeld führt.

Grundsätzlich erlaubt die Verwendung einer Mehrzahl von Messmodulen, dass eine Fehlertoleranz und/oder eine hohe Ausfallsicherheit ermöglicht wird, da Werte von Windgeschwindigkeiten über mehrere Detektionseinheiten erfasst und entsprechende Wetterdaten mehrfach aufgenommen und weitergeleitet werden. Daher wird eine Redundanz der Daten und somit eine erhöhte Ausfallsicherheit ermöglicht.

Vorzugsweise ist in jedem Messmodul eine Positionsinformation hinterlegt, die eine Position der zentralen Auswerteeinheit indiziert. Vorzugsweise wird die Position der zentralen Auswerteeinheit relativ zu dem Messmodul durch die Positionsinformation indiziert. Durch diese Positionsinformationen kann eine zielgerichtete Bereitstellung des Detektionssignals an die zentrale Auswerteeinheit ermöglicht werden.

Vorzugsweise umfasst ein jeweiliges Messmodul mindestens genauso viele Detektionseinheiten wie Lasereinheiten. Besonders bevorzugt ist jeder Lasereinheit genau eine Detektionseinheit zugeordnet. Die zugeordnete Detektionseinheit ist vorzugsweise derart ausgebildet, dass eine Richtung von zurückreflektiertem Laserlicht ausgewertet werden kann. Derartige Detektionseinheiten sind im Rahmen der sogenannten Lidar-Methode dem Fachmann bekannt, so dass auf mögliche Strukturen derartiger Detektionseinheiten im Folgenden nicht detailliert eingegangen wird.

Gemäß einem zweiten Aspekt der Erfindung wird zur Lösung der oben genannten Aufgabe ein Verfahren zur Bestimmung eines Windfeldes im Bereich mindestens einer Windenergieanlage vorgeschlagen, aufweisend die Schritte:
- stationäres Anordnen eines Messmoduls an der Windenergieanlage zum Aufnehmen mindestens einer Lasereinheit in dem Messmodul;
- Ausstrahlen mindestens eines Laserstrahls durch die Lasereinheit in eine von einer Aufstellfläche der Windenergieanlage weg weisende Richtung;
- Detektieren von zurückreflektiertem Licht des mindestens einen Laserstrahls;
- Bereitstellen von durch das zurückreflektierte Licht indizierten Wetterdaten;
- Empfangen der Wetterdaten und Bestimmen des vorliegenden Windfeldes basierend auf den Wetterdaten; und
- Bereitstellen eines Ausgabesignals abhängig von dem bestimmten Windfeld.

Das Verfahren gemäß dem zweiten Aspekt der Erfindung umfasst die gleichen Vorteile wie das Windmesssystem gemäß dem ersten Aspekt Erfindung, da ein solches Windmesssystem das erfindungsgemäße Verfahren während des Betriebs ausführt.

Insbesondere führt das erfindungsgemäße Verfahren durch die Anordnung des Messmoduls an der Windenergieanlage zu einer besonders zuverlässigen Bestimmung des Windfeldes in unmittelbarer Umgebung der Rotorblätter der Windenergieanlage.

Vorteilhafte Weiterbildungen, wie beispielsweise eine Messung der Temperatur und/oder der Luftdichte oder wie beispielsweise die Bereitstellung von Konfigurationsdaten, Steuerungsdaten und/oder Nutzerdaten, ergeben sich für einen Fachmann direkt analog zu den erläuterten Ausführungsformen des Windmesssystems gemäß dem ersten Aspekt der Erfindung.

Vorzugsweise erfolgt die Bestimmung des vorliegende Windfeldes kontinuierlich oder in zeitlichen Abstanden von weniger als 10 Minuten, insbesondere von weniger als 3 Minuten.

Die Ausgabe des Ausgabesignals erfolgt unmittelbare nach dem Bestimmen des aktuellen Windfeldes und/oder nach dem Erreichen eines Schwellenwertes für einen vorbestimmten Parameter innerhalb des Windfeldes, wie etwa einer Windgeschwindigkeit, einer Windgeschwindigkeitsänderung, einer Richtungsänderung und/oder dergleichen.

Das Ausgabesignal kann dabei an mindestens ein Messmodul ausgegeben werden, um dadurch einen Regelkreis zur automatischen Regelung der Ausrichtung mindestens einer Windenergieanlage zu ermöglichen. Alternativ oder ergänzend kann das Ausgabesignal an ein externes Gerät und/oder eine Nutzerschnittstelle ausgegeben werden.

Gemäß einem dritten Aspekt der Erfindung wird zur Lösung der oben genannten Aufgabe ein Verfahren zur Kalibrierung eines Windmesssystems gemäß einer Ausführungsform des ersten Aspekts der Erfindung mittels einer Drohne vorgeschlagen, aufweisend die Schritte
- Anordnen eines Laserdetektors an der Drohne;
- Steuern einer Drohne derart, dass sie einen Punkt des Laserstrahls der mindestens einen Lasereinheit detektiert; und
- Auswerten einer aktuellen Position der Drohne während der Detektion des Laserstrahls zum Kalibrieren der mindestens einen Lasereinheit basierend auf einem Vergleich zwischen einer vorbestimmten Vergleichsposition und der ausgewerteten aktuellen Position.

Das Verfahren gemäß dem dritten Aspekt der Erfindung ermöglicht durch die Verwendung der Drohne eine besonders präzise Kalibrierung des Windmesssystems.

Die Auswertung der aktuellen Position der Drohne kann dabei zentrale durch die zentrale Auswerteeinheit, ein externes Drohnen-Steuerungsmodul, ein Messmodul des Windmesssystems und/oder dergleichen erfolgen. Vorzugsweise kann die Drohne dabei mindestens 200 m über dem Boden, insbesondere mindestens 300 m über dem Boden, für die Kalibrierung des Windmesssystems genutzt werden.

Gemäß einem vierten Aspekt der Erfindung wird zur Lösung der oben genannten Aufgabe ein Computerprogramm mit einem Programmcode zur Durchführung eines Verfahrens gemäß dem zweiten Aspekt der Erfindung und/oder gemäß dem dritten Aspekt der Erfindung vorgeschlagen. Dabei wird der Programmcode auf einem Computer, einem Prozessor oder einer programmierbaren Hardwarekomponente ausgeführt. Vorzugsweise werden mehrere Schritte des erfindungsgemäßen Verfahrens durch einen gemeinsamen Computer, einen gemeinsamen Prozessor oder eine gemeinsame programmierbare Hardwarekomponente ausgeführt. Vorzugsweise sind die einzelnen Schritte dabei zumindest auf Software-Ebene voneinander durch entsprechende Softwareblöcke getrennt. Besonders bevorzugt werden alle Schritte des entsprechenden erfindungsgemäßen Verfahrens auf einem gemeinsamen Computer, einem gemeinsamen Prozessor oder einer gemeinsamen programmierbaren Hardwarekomponente ausgeführt. Alternativ oder ergänzend werden zumindest die durch die zentrale Auswerteeinheit ausgeführten Verfahrensschritte auf einem gemeinsamen Computer, einem gemeinsamen Prozessor oder einer gemeinsamen programmierbaren Hardwarekomponente ausgeführt.

Die Erfindung soll nun anhand von in den Figuren schematisch dargestellten, vorteilhaften Ausführungsbeispielen näher erläutert werden. Von diesen zeigen im Einzelnen:
- Fig. 1: eine schematische Darstellung eines ersten Ausführungsbeispiels eines Windmesssystems gemäß einem ersten Aspekt der Erfindung;
- Fig. 2: eine schematische Darstellung eines zweiten Ausführungsbeispiels des Windmesssystems gemäß dem ersten Aspekt der Erfindung;
- Fig. 3: eine schematische Darstellung eines dritten Ausführungsbeispiels des Windmesssystems gemäß dem ersten Aspekt der Erfindung;
- Fig. 4: ein Flussdiagramm eines Ausführungsbeispiels eines Verfahrens gemäß einem zweiten Aspekt der Erfindung; und
- Fig. 5: ein Flussdiagramm eines Ausführungsbeispiels eines Verfahrens gemäß einem dritten Aspekt der Erfindung.

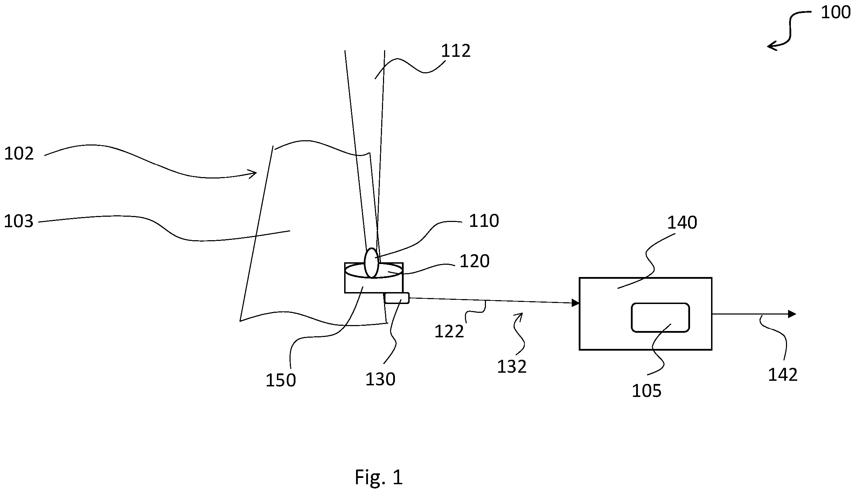

Fig. 1 zeigt eine schematische Darstellung eines ersten Ausführungsbeispiels eines Windmesssystems 100 gemäß einem ersten Aspekt der Erfindung.

Das Windmesssystem 100 ist zur Bestimmung eines Windfeldes 105 im Bereich mindestens einer Windenergieanlage 102 ausgebildet. Hierfür weist das Windmesssystem 100 mindestens eine Lasereinheit 110, mindestens eine Detektionseinheit 120, mindestens eine Datenschnittstelle 130 und eine zentrale Auswerteeinheit 140 auf. Die Lasereinheit 110 ist dabei stationär innerhalb eines Messmoduls 150 angeordnet und dieses Messmodul 150 ist über eine nicht dargestellte Befestigung an der Windenergieanlage 102 angeordnet. Das Messmodul ist dabei vorliegenden an einem Mast 103 der Windenergieanlage 102 befestigt. In nicht dargestellten Ausführungsbeispielen des erfindungsgemäßen Windmesssystems ist das Messmodul 140 an einer Gondel einer Windenergieanlage, an einem Fundament einer Windenergieanlage, innerhalb des Mastes einer Windenergieanlage oder dergleichen befestigt.

Die mindestens eine Lasereinheit 110 ist angeordnet und ausgebildet, einen Laserstrahl 112 in eine von einer Aufstellfläche der Windenergieanlage 102 weg weisende Richtung zu strahlen. Der Laserstrahl 112 hat dabei einen leicht divergenten Strahlenverlauf und bildet dadurch einen Lichtkegel, welcher in den Himmel gerichtet ist.

Die mindestens eine Detektionseinheit 120 ist angeordnet und ausgebildet, zurückreflektiertes Licht des Laserstrahls 112 zu detektieren und ein entsprechendes Detektionssignal 122 auszugeben. Hierfür kann die Detektionseinheit 120 beispielsweise ringförmig um die Lasereinheit 110 ausgebildet sein.

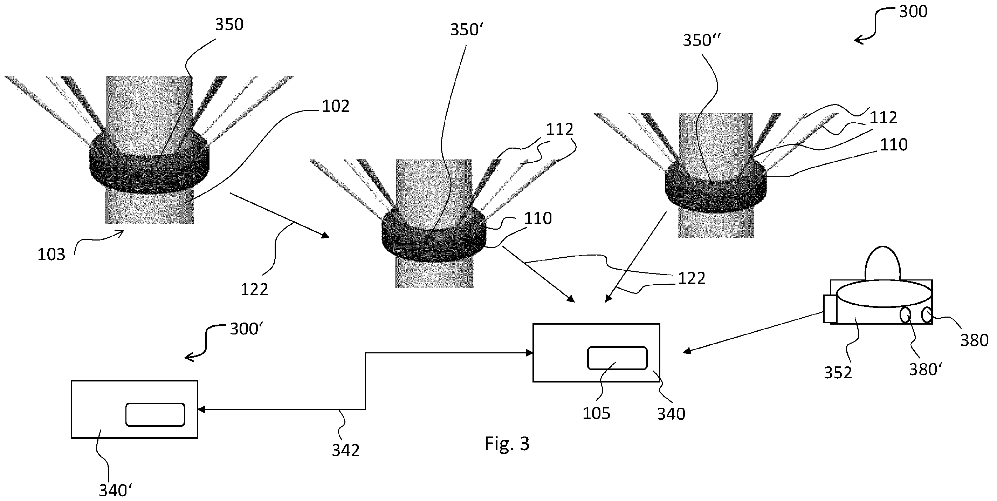

Die mindestens eine Datenschnittstelle 130 ist angeordnet und ausgebildet, durch das Detektionssignal 122 indizierte Wetterdaten 132 bereitzustellen. Hierfür verfügt die Datenschnittstelle über eine signaltechnische Verbindung mit der mindestens einen Detektionseinheit 120 und über eine kabellose Verbindung mit der zentralen Auswerteeinheit 140. Die kabellose Verbindung kann beispielsweise eine Funkverbindung, eine WLAN-Verbindung, eine ZigBee-Verbindung und/oder dergleichen sein. In einem alternativen oder ergänzenden nicht dargestellten Ausführungsbeispiel ist die Verbindung zwischen der Datenschnittstelle und der zentralen Auswerteeinheit eine kabelbasierte Schnittstelle. In dem dargestellten Ausführungsbeispiel ist die Datenschnittstelle 130 direkt der entsprechenden Detektionseinheit 120 zugeordnet. Alternativ oder ergänzend kann auch dem Messmodul mit einer Mehrzahl von Detektionseinheiten eine einzige Datenschnittstelle zugeordnet sein, wie dies beispielsweise in Fig. 3 dargestellt ist.

Die Datenschnittstelle 130 aus ausgebildet, das Detektionssignal 122, welches die Wetterdaten 132 transportiert, direkt an die zentrale Auswerteeinheit 140 weiterzuleiten. Alternativ oder ergänzend kann auch ein von dem Detektionssignal verschiedenes Signal zum Bereitstellen der Wetterdaten für die zentrale Auswerteeinheit verwendet werden.

Die zentrale Auswerteeinheit 140 ist ausgebildet, die bereitgestellten Wetterdaten 132 zu empfangen und basierend auf den Wetterdaten 132 das im Bereich der Windenergieanlage 102 vorliegende Windfeld 105 zu bestimmen und abhängig von dem bestimmten Windfeld 105 ein Ausgabesignal 142 bereitzustellen. Mögliche Algorithmen für eine derartige Bestimmung des Windfeldes 105 sind dem Fachmann im Rahmen von Anwendungen der Lidar-Methode im Bereich der Meteorologie bekannt, so dass Details zu dieser Bestimmung im Folgenden nicht erläutert werden.

Das Ausgabesignal 142 wird vorliegend beispielsweise ausgegeben, wenn eine detektierte Richtungsänderung des Windes im Bereich der mindestens einen Windenergieanlage 102 für einen vorbestimmten Zeitabstand zu einer früheren Detektion einen Schwellenwert übersteigt. Alternativ oder ergänzend kann das Ausgabesignal in regelmäßigen zeitlichen Abständen ausgegeben werden, um einem externen Gerät das vorliegende Windfeld bereitzustellen. Hierdurch kann beispielsweise ein Betreiber der Windenergieanlage auf Veränderungen der Windrichtung hingewiesen werden und dadurch eine manuelle Veränderung der Ausrichtung der Windenergieanlage vorschlagen. Alternativ oder ergänzend kann das Ausgabesignal an eine jeweilige Windenergieanlage ausgeben werden, um dadurch automatisiert eine Anpassung der Ausrichtung der Windenergieanlage an das aktuell vorliegende Windfeld zu ermöglichen. Hierdurch kann vorteilhaft auf eine manuelle Einstellung der Ausrichtung der jeweiligen Windenergieanlage verzichtet werden.

Die Lasereinheit 110 ist vorliegend ausgebildet, in einem gepulsten Laserbetrieb zu arbeiten. Hierdurch wird eine für das Windmesssystem bereitzustellende Leistung verglichen mit einem Dauerbetrieb des entsprechenden Lasers reduziert.

Die zentrale Auswerteeinheit 140 ist ausgebildet, für die Bestimmung des vorliegenden Windfeldes gespeicherte Steuerungsdaten, Konfigurationsdaten und/oder Nutzerdaten zu verwenden. Derartige Daten können über ein Netzwerk, wie etwa eine Daten-Cloud, oder über eine entsprechende Speichereinheit bereitgestellt werden. Derartige Daten ermöglichen eine Berücksichtigung des aktuellen Zustands einer entsprechenden Windenergieanlage. So können Steuerungsdaten beispielsweise eine aktuelle Rotationsgeschwindigkeit und/oder eine voreingestellte Drehzahl einer Windenergieanlage, eine aktuelle Ausrichtung einer Windenergieanlage, eine aktuelle Position einer elektronisch verfahrbaren Abschirmung eines Messmoduls oder dergleichen betreffen. Konfigurationsdaten können beispielsweise eine detektierte Verwendung von vorbestimmten Aufnahmen eines Messmoduls, oder Gerätetypen von verwendeten Komponenten des Windmesssystems betreffen. Nutzerdaten können beispielsweise manuell angepasste Einstellungen des Windmesssystems und/oder individuell eingestellte bevorzugte Betriebszeiten oder dergleichen betreffen.

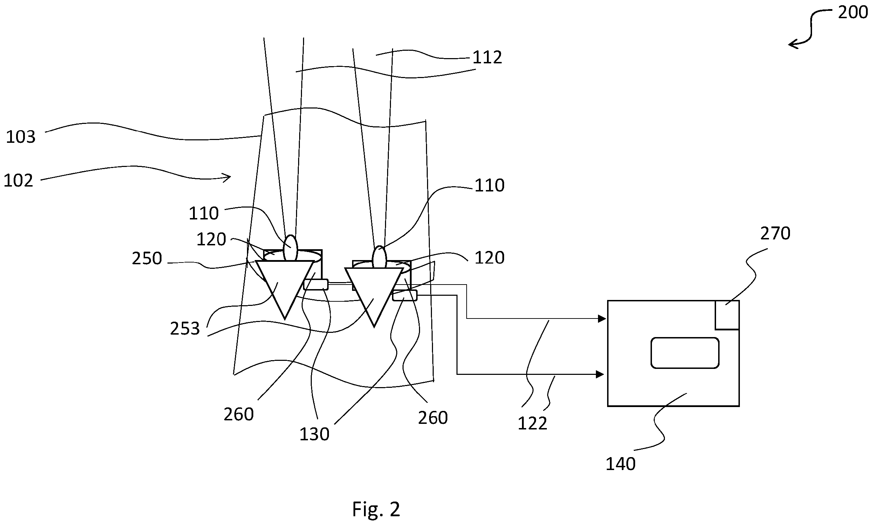

Fig. 2 zeigt eine schematische Darstellung eines zweiten Ausführungsbeispiels des Windmesssystems 200 gemäß dem ersten Aspekt der Erfindung.

Das Windmesssystem 200 ist ähnlich zu dem Windmesssystem 100 aus Fig. 1 aufgebaut, wobei das Messmodul 250 jedoch ringförmig ausgebildet ist und in einem montierten Zustand einen Mast 103 der Windenergieanlage 102 umgibt. In dem dargestellten Ausführungsbeispiel ist das Messmodul 250 teilweise elastisch ausgebildet, so dass es um den Mast 103 gedreht und dann über ein Verschlusselement lösbar befestigt werden kann und dadurch seine Ringform erhält. Das Verschlusselement kann eine Rastverbindung, eine Klemmverbindung, eine Schraubverbindung und/oder dergleichen sein.

Das Messmodul 250 hat mindestens einen Aufnahmebereich 253, in dem dargestellten Ausführungsbeispiel mindestens drei Aufnahmebereiche 253, nämlich insgesamt 4 Aufnahmebereiche 253, zum lösbaren Befestigen mindestens eines Detektionsgehäuses 260. Das Detektionsgehäuse 260 bildet ein auswechselbares Modul, welches mindestens eine Lasereinheit 110 und mindestens eine Detektionseinheit 120 umfasst. Durch die Kombination von Lasereinheit 110 und Detektionseinheit 120 in dem auswechselbaren Detektionsgehäuse 260 wird sichergestellt, dass eine relative Lage zwischen dem Laserstrahl 112 und der Detektionseinheit 120 konstant bleibt und dennoch einzelne Komponenten des Messmoduls 250 verändert, ausgetauscht und/oder repariert werden können, ohne das gesamte Messmodul 250 entfernen zu müssen. Das Detektionsgehäuse 260 ist daher ein Gehäuse, welches eine vergleichbare Funktionalität wie das Messmodul 150 aus Fig. 1 aufweist.

Aus Gründen der Übersichtlichkeit ist eine elektronisch verfahrbare Abschirmung, welche den jeweiligen Aufnahmebereich 253 vor Umgebungseinflüssen schützen soll, nicht in Fig. 2 dargestellt. In dem Ausführungsbeispiel ist diese Abschirmung durch einen nicht dargestellten Lamellenverschluss mit elektrisch umklappbaren Lamellen umgesetzt.

Die Ausrichtung der Laserstrahlen 112 ist bei dem Messmodul 250, genauso wie bei den in Fig. 3 gezeigten Messmodulen, so gewählt, dass die Laserstrahlen 112 eine Drehsymmetrie bezüglich einer durch den Mast 103 der entsprechenden Windenergieanlage 102 gebildeten Drehachse aufweisen. Die jeweilige Ausrichtung kann dabei auch so gewählt sein, dass alle Laserstrahlen einen gleichen Winkel mit dem Mast 103 bilden.

Schließlich weist das Windmesssystem 200 weiterhin eine Speichereinheit 270 auf, in der Daten zu jeder Lasereinheit 110 des Windmesssystems 200 hinterlegt sind. Vorzugsweise betreffen die hinterlegten Daten Kalibrierungsdaten, die einen finalen Kalibrierungszustand der entsprechenden Lasereinheit indizieren. Zudem können die hinterlegten Daten auch eine Identifizierungsnummer indizieren, durch welche ein empfangenes Detektionssignal 122 mit einer entsprechenden Identifikationsnummer dem detektierten Laserstrahl 112 zugeordnet werden kann.

Jedem Detektionsgehäuse 260 des Windmesssystems 200 ist eine separate Datenschnittstelle 130 zugeordnet, so dass jedes Detektionsgehäuse 260 mit einer entsprechenden Lasereinheit 110 ein separates Detektionssignal 122 an die zentrale Auswerteeinheit 140 sendet. Alternativ oder ergänzend kann jedes Messmodul über eine separate Datenschnittstelle verfügen, so dass alle Detektionssignale aus einem Messmodul im Rahmen eines gemeinsamen Detektionssignals an die zentrale Auswerteeinheit gesendet werden.

Fig. 3 zeigt eine schematische Darstellung eines dritten Ausführungsbeispiels des Windmesssystems 300 gemäß dem ersten Aspekt der Erfindung.

Das Windmesssystem 300 verfügt über eine Sensoreinheit 380 an mindestens einem Messmodul 350, 350`, 350", 352. In dem dargestellten Ausführungsbeispiel verfügt das bodennahe Messmodul 352 über zwei Sensoreinheiten 380, 380` zur Bestimmung von Temperaturdaten und/oder Luftdichtedaten. Die zentrale Auswerteeinheit 340 ist zusätzlich ausgebildet, für die Bestimmung des vorliegenden Windfeldes 105 die Temperaturdaten und/oder die Luftdichtedaten zumindest teilweise zu berücksichtigen. Das bodennahe Messmodul 352 ist nicht an einer Windenergieanlage 102 befestigt und hat daher einen von einem Windpark unabhängigen Standort. Die anderen Messmodule 350, 350`, 350" sind identisch ausgebildet.

Das Windmesssystem 300 weist eine Mehrzahl von Messmodulen 350, 350`, 350" auf, die jeweils eine Mehrzahl von Lasereinheiten 110 und eine Mehrzahl von Detektionseinheiten umfassen. In dem dargestellten Ausführungsbeispiel weist jedes der an einem Mast 103 befestigten Messmodulen 350, 350`, 350" zwischen 4 und 10 Lasereinheiten 110, nämlich zwischen 5 und 8 Lasereinheiten 110, vorliegend 8 Lasereinheiten 110 auf. Die Laserstrahlen 112 sind dabei rotationssymmetrisch um den Mast 103 der Windenergieanlage 102 angeordnet und weisen in etwa einen gleichen Abstrahlwinkel relativ zu dem entsprechenden Mast 103 auf. Jedes Messmodul 350, 350`, 350" verfügt über eine jeweilige Datenschnittstelle über welche alle Ergebnisse der entsprechenden nicht dargestellten Detektionseinheiten zusammen als ein Detektionssignal 122 an die zentrale Auswerteeinheit 140 ausgegeben werden können. In dem dargestellten Ausführungsbeispiel erfolgt das Bereitstellen der Daten an die zentrale Auswerteeinheit 340 aber eine kabellose Verbindung.

Schließlich ist die zentrale Auswerteeinheit 340 in dem dargestellten Ausführungsbeispiel zusätzlich ausgebildet, Daten, insbesondere Wetter-spezifische Daten, mit einem anderen Windmesssystem 300` auszutauschen. Dieser Datenaustausch erfolgt vorliegend über eine kabellose Verbindung. Alternativ oder ergänzend kann auch eine kabelbasierte Verbindung zwischen verschiedenen Windmesssystemen existieren. Vorliegend erfolgt dieser Datenaustausch durch eine Verbindung zwischen zwei zentralen Auswerteeinheiten 340, 340`. Dabei können sich die zentralen Auswerteinheiten 340, 340' unter anderem auch das bestimmte Windfeld über das Ausgabesignal 342 untereinander austauschen.

Das Windmesssystem 300 aus Fig. 3 verdeutlicht, dass solch ein erfindungsgemäßes Windmesssystem 300 besonders vorteilhaft für einen Windpark mit einer Vielzahl gleichartiger Windenergieanlagen und einer daher möglichen Vielzahl gleichartiger Messmodule 350, 350`, 350" ist. Hier kann eine besonders intensive und teilweise redundante Detektion aktueller Luftströmungen und dadurch eine besonders zuverlässige Bestimmung des Windfeldes 105 erfolgen.

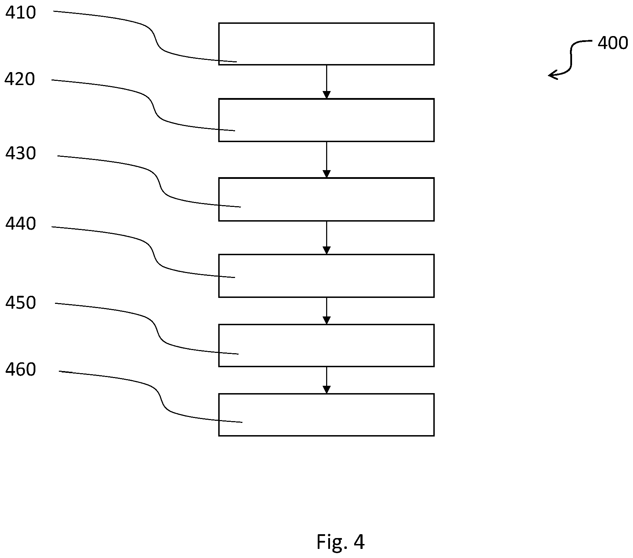

Fig. 4 zeigt ein Flussdiagramm eines Ausführungsbeispiels eines Verfahrens 400 gemäß einem zweiten Aspekt der Erfindung.

Das Verfahren 400 ist zur Bestimmung eines Windfeldes im Bereich mindestens einer Windenergieanlage ausgebildet. Hierfür weist das Verfahren 400 die im Folgenden beschriebenen Schritte auf.

Ein erster Schritt 410 umfasst ein stationäres Anordnen eines Messmoduls an der Windenergieanlage zum Aufnehmen mindestens einer Lasereinheit in dem Messmodul.

Ein darauffolgender Schritt 420 umfasst ein Ausstrahlen mindestens eines Laserstrahls durch die Lasereinheit in eine von einer Aufstellfläche der Windenergieanlage weg weisende Richtung.

Ein nächster Schritt 430 umfasst ein Detektieren von zurückreflektiertem Licht des mindestens einen Laserstrahls.

Ein weiterer Schritt 440 umfasst ein Bereitstellen von durch das zurückreflektierte Licht indizierten Wetterdaten.

Ein darauffolgender Schritt 450 umfasst ein Empfangen der Wetterdaten und ein Bestimmen des vorliegenden Windfeldes basierend auf den Wetterdaten.

Ein abschließender Schritt 460 umfasst ein Bereitstellen eines Ausgabesignals abhängig von dem bestimmten Windfeld.

Der Schritt 410 erfolgt bei dem Anordnen des Messmoduls an der Windenergieanlage und kann somit zeitlich lange vor den Schritten 420, 430, 440, 450 und 460 erfolgen.

Die Ausgabe des Ausgabesignals im Schritt 460 kann beispielsweise nach jedem Bestimmen des vorliegenden Windfeldes, wie etwa nach Zeitintervallen von weniger als 10 Minuten, insbesondere von weniger als 3 Minuten erfolgen. Alternativ oder ergänzend kann die Ausgabe des Ausgabesignals erst nach dem Erreichen eines Schwellenwertes für einen durch das Windfeld indizierten Parameter erfolgen. Das kann ein Schwellenwert für eine Windgeschwindigkeit, eine Änderung einer Windrichtung und/oder dergleichen sein.

Die Schritte 420, 430, 440 und 450 werden vorzugsweise direkt aufeinanderfolgend und in regelmäßigen zeitlichen Abständen ausgeführt.

Das Verfahren 400 kann um ein oder mehrere Zwischenschritte ergänzt werden, die durch Ausführungsbeispiele des erfindungsgemäßen Windmesssystems impliziert sind. So kann eine Messung von weiteren Parametern, wie etwa der Temperatur und/oder der Luftdichte erfolgen. Zudem können weitere Daten gespeichert und für die Bestimmung des Windfeldes berücksichtigt werden, wie etwa Nutzerdaten, Konfigurationsdaten und/oder Steuerungsdaten.

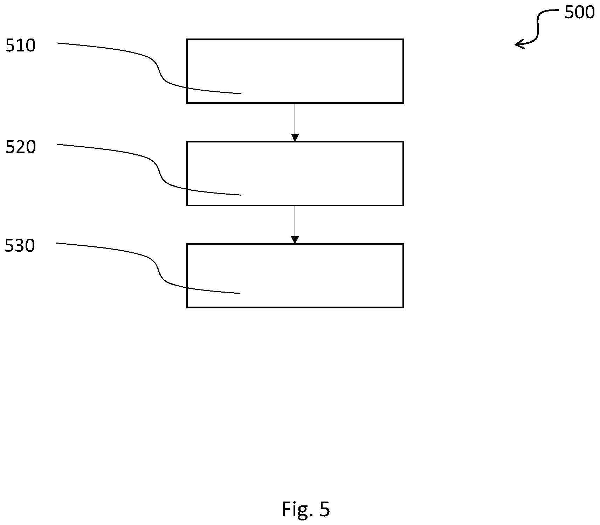

Fig. 5 zeigt ein Flussdiagramm eines Ausführungsbeispiels eines Verfahrens 500 gemäß einem dritten Aspekt der Erfindung.

Das Verfahren 500 ist zur Kalibrierung eines Windmesssystems gemäß mindestens einem der Ausführungsformen des erfindungsgemäßen Windmesssystems mittels einer Drohne ausgebildet. Hierfür weist das Verfahren 500 die im Folgenden beschriebenen Schritte auf.

Ein erster Schritt 510 umfasst ein Anordnen eines Laserdetektors an der Drohne.

Ein nächster Schritt 520 umfasst ein Steuern einer Drohne derart, dass sie einen Punkt des Laserstrahls der mindestens einen Lasereinheit detektiert.

Ein weiterer Schritt 530 umfasst ein Auswerten einer aktuellen Position der Drohne während der Detektion des Laserstrahls zum Kalibrieren der mindestens einen Lasereinheit basierend auf einem Vergleich zwischen einer vorbestimmten Vergleichsposition und der ausgewerteten aktuellen Position.

Der erster Schritt 510 kann zeitlich lange vor den Schritten 520 und 530 erfolgen, da die Drohne dauerhaft für die Verwendung zur Kalibrierung des Windmesssystems mit dem Laserdetektor ausgestattet sein kann. Die Schritte 520 und 530 sind unmittelbar aufeinanderfolgende Schritte, wobei sie im Rahmen der Kalibrierung stets erneut ausgeführt werden müssen.

Die erfindungsgemäße Kalibrierung ist besonders vorteilhaft, weil die mindestens eine Lasereinheit des Windmesssystems an einer Windenergieanlage angeordnet ist und Windenergieanlagen meist auf freier Fläche stehen, auf der für Drohnen keine störenden Bäume, Stromleitungen oder dergleichen angeordnet sind. Daher ist die Verwendung von einer Drohne mit freier Sicht auf den Laserstrahl der Lasereinheit zuverlässig möglich.

Die Drohne fliegt bis in mindestens 200 m, vorzugsweise mindestens 300 m. Höhe für das Verfahren 500. Dabei wird vorzugsweise eine Genauigkeit der Kalibrierung von etwa 2 cm auf 2 km Entfernung erreicht.

### Bezugszeichenliste

- 100, 200, 300, 300': Windmesssystem
- 102: Windenergieanlage
- 103: Mast
- 105: Windfeld
- 110: Lasereinheit
- 112: Laserstrahl
- 120: Detektionseinheit
- 122: Detektionssignal
- 130: Datenschnittstelle
- 132: Wetterdaten
- 140, 340, 340`: zentrale Auswerteeinheit
- 142, 342: Ausgabesignal
- 150, 250, 350, 350`, 350": Messmodul
- 253: Aufnahmebereich
- 260: Detektionsgehäuse
- 270: Speichereinheit
- 352: bodennahes Messmodul
- 380, 380`: Sensoreinheit
- 400, 500: Verfahren
- 410, 420, 430, 440, 450 460, 510, 520, 530: Verfahrensschritte

## Patentansprüche

1. Windmesssystem (100) zur Bestimmung eines Windfeldes (105) im Bereich mindestens einer Windenergieanlage (102), mit
- mindestens einer Lasereinheit (110), welche angeordnet und ausgebildet ist, einen Laserstrahl (112) in eine von einer Aufstellfläche der Windenergieanlage (102) weg weisende Richtung zu strahlen,
- mindestens einer Detektionseinheit (120), welche angeordnet und ausgebildet ist, zurückreflektiertes Licht des Laserstrahls (112) zu detektieren und ein entsprechendes Detektionssignal (122) auszugeben,
- mindestens einer Datenschnittstelle (130), welche angeordnet und ausgebildet ist, durch das Detektionssignal (122) indizierte Wetterdaten (132) bereitzustellen,
- einer zentralen Auswerteeinheit (140), die ausgebildet ist, die bereitgestellten Wetterdaten (132) zu empfangen und basierend auf den Wetterdaten (132) das im Bereich der Windenergieanlage (102) vorliegende Windfeld (105) zu bestimmen und abhängig von dem bestimmten Windfeld (105) ein Ausgabesignal (142) bereitzustellen,
wobei mindestens eine Lasereinheit (110) an einem stationär an der Windenergieanlage (102) befestigbaren Messmodul (150) des Windmesssystems (100) angeordnet ist.

2. Windmesssystem (100) gemäß Anspruch 1, wobei das Messmodul (150) ringförmig ausgebildet ist und in einem montierten Zustand einen Mast (103) der Windenergieanlage (102) umgibt.

3. Windmesssystem (100) gemäß Anspruch 1 oder 2, wobei das Messmodul (150) mindestens einen Aufnahmebereich (260), insbesondere mindestens drei Aufnahmebereiche (253), zum lösebaren Befestigen mindestens eines Detektionsgehäuses (260) umfasst, wobei das Detektionsgehäuse (260) eine Lasereinheit (110) und eine Detektionseinheit (120) des Windmesssystems (100) umfasst.

4. Windmesssystem (100) gemäß Anspruch 3, wobei ein Aufnahmebereich (253) durch eine elektronisch verfahrbare Abschirmung vor Umgebungseinflüssen geschützt werden kann.

5. Windmesssystem (100) gemäß mindestens einem der vorhergehenden Ansprüche, aufweisend eine Mehrzahl von Messmodulen (150) mit mindestens einer jeweiligen Lasereinheit (110) und mit mindestens einer jeweiligen Detektionseinheit (120), wobei jedes Messmodul (150) mindestens eine Datenschnittstelle (130) zum Bereitstellen der empfangenen Daten für die zentrale Auswerteeinheit (140) aufweist.

6. Windmesssystem (100) gemäß mindestens einem der vorhergehenden Ansprüche, wobei eine Ausrichtung der Lasereinheiten (110) eines Messmoduls (150) derart gewählt ist, dass die Laserstrahlen (112) eine Drehsymmetrie bezüglich einer durch den Mast (103) der entsprechenden Windenergieanlage (102) gebildeten Drehachse aufweisen.

7. Windmesssystem (100) gemäß mindestens einem der vorhergehenden Ansprüche, weiterhin aufweisend eine Speichereinheit (270), in der Daten zu jeder Lasereinheit (110) des Windmesssystems (100) hinterlegt sind, insbesondere Identifikationsdaten und/oder Kalibrierungsdaten hinterlegt sind.

8. Windmesssystem (100) gemäß mindestens einem der vorhergehenden Ansprüche, wobei die Lasereinheiten (110) des Windmesssystems (100) ausgebildet sind, in einem gepulsten Laserbetrieb zu arbeiten.

9. Windmesssystem (100) gemäß mindestens einem der vorhergehenden Ansprüche, wobei die zentrale Auswerteeinheit (140) ausgebildet ist, für die Bestimmung des vorliegenden Windfeldes (105) gespeicherte Steuerungsdaten, Konfigurationsdaten und/oder Nutzerdaten zu verwenden.

10. Windmesssystem (100) gemäß mindestens einem der vorhergehenden Ansprüche, wobei an mindestens einem Messmodul (150) eine Sensoreinheit (280) zur Bestimmung von Temperaturdaten und/oder Luftdichtedaten angeordnet ist, und wobei die zentrale Auswerteeinheit (140) ausgebildet ist, für die Bestimmung des vorliegenden Windfeldes (105) die Temperaturdaten und/oder die Luftdichtedaten zumindest teilweise zu verwenden.

11. Windmesssystem (100) gemäß mindestens einem der vorhergehenden Ansprüche, wobei die zentrale Auswerteeinheit (140) ausgebildet ist, Daten, insbesondere Wetter-spezifische Daten, mit einem anderen Windmesssystem (300') auszutauschen.

12. Windmesssystem (100) gemäß mindestens einem der vorhergehenden Ansprüche, weiterhin aufweisend mindestens ein bodennahes Messmodul (352), welches nicht an einer Windenergieanlage (102) angeordnet ist.

13. Verfahren (400) zur Bestimmung eines Windfeldes (105) im Bereich mindestens einer Windenergieanlage (102), aufweisend die Schritte:
- stationäres Anordnen eines Messmoduls (150) an der Windenergieanlage (102) zum Aufnehmen mindestens einer Lasereinheit (110) in dem Messmodul (150);
- Ausstrahlen mindestens eines Laserstrahls (112) durch die Lasereinheit (110) in eine von einer Aufstellfläche der Windenergieanlage (102) weg weisende Richtung;
- Detektieren von zurückreflektiertem Licht des mindestens einen Laserstrahls (112);
- Bereitstellen von durch das zurückreflektierte Licht indizierten Wetterdaten (132);
- Empfangen der Wetterdaten (132) und Bestimmen des vorliegenden Windfeldes (105) basierend auf den Wetterdaten (132);
- Bereitstellen eines Ausgabesignals (142) abhängig von dem bestimmten Windfeld (105).

14. Verfahren (500) zur Kalibrierung eines Windmesssystems (100) gemäß mindestens einem der Ansprüche 1 bis 12 mittels einer Drohne, aufweisend die Schritte
- Anordnen eines Laserdetektors an der Drohne;
- Steuern einer Drohne derart, dass sie einen Punkt des Laserstrahls (112) der mindestens einen Lasereinheit (110) detektiert;
- Auswerten einer aktuellen Position der Drohne während der Detektion des Laserstrahls (112) zum Kalibrieren der mindestens einen Lasereinheit (110) basierend auf einem Vergleich zwischen einer vorbestimmten Vergleichsposition und der ausgewerteten aktuellen Position.

15. Computerprogramm mit einem Programmcode zur Durchführung eines Verfahrens (400, 500) gemäß Anspruch 13 oder 14, wenn der Programmcode auf einem Computer, einem Prozessor oder einer programmierbaren Hardwarekomponente ausgeführt wird.
